# EUROPEAN PATENT SPECIFICATION

(11) **EP 1 716 353 B1**
(45) Date of publication and mention of the grant of the patent: **25.11.2009**
(21) Application number: 05707160.7
(22) Date of filing: 03.02.2005
(51) Int. Cl.: F16H 57/04

(54) **APPARATUS FOR CONVERSION OF A ROTATION MOVEMENT INTO BACK-AND-FORWARD ROTATION MOVEMENTS**
VORRICHTUNG ZUR UMWANDLUNG EINER DREHBEWEGUNG ZU RÜCKWÄRTS- UND VORWÄRTS-DREHBEWEGUNGEN
APPAREIL DE CONVERSION D'UN MOUVEMENT ROTATIF EN MOUVEMENTS ROTATIFS AVANT / ARRIERE

(30) Priority: 16.02.2004 DE 102004008448
(43) Date of publication of application: 02.11.2006
(73) Proprietor: Picanol N.V., 8900 Ieper (BE)
(72) Inventor: ROELSTRAETE, Kristof, B-8550 Zwevegem (BE)
(74) Representative: Patentanwälte Ruff, Wilhelm, Beier, Dauster & Partner
(86) International application number: PCT/EP2005/001069
(87) International publication number: WO 2005/078317

(56) References cited:
- EP-A- 0 665 908
- GB-A- 2 283 074
- US-A- 3 323 382
- US-A- 3 798 983
- US-A- 6 158 720

## Description

The invention relates to an apparatus for conversion of a rotation movement into back-and-forward rotation movements having a nut drivable by means of a drive for back-and-forward linear movement and arranged on a rotatably mounted threaded spindle and made up of two split nuts adjustable to one another in their relative position.

Use of an apparatus of the type mentioned at the outset is known (EP 066598 B1 corresponding to the preamble of claim 1) for driving gripper belts of a rapier loom. The gripper belts, supporting a gripper at the end, run around a drive wheel by which they are inserted into a shed made up of warp threads and taken out again after delivering the weft thread or taking over the weft thread. The drive wheel around which the gripper belt is wound performs back-and-forward rotation movements with changing rotation direction. These back-and-forward rotating movements are transmitted by a crank drive disc rotating in the same direction at all times. The nut comprises two split nuts, split in the axial direction or radial direction, that are adjusted relative to one another and can be fixed in the adjusted position in order to compensate for any play between the nut and the thread of the threaded spindle. In the embodiment with the nut split in the longitudinal direction, a lubrication system for liquid lubricant is provided that leads to a side wall of one of the thread grooves of the one split nut. The liquid lubricant is to be supplied by gravity or if necessary under pressure.

An apparatus of the type mentioned at the outset used for driving a gripper belt is subject to high mechanical and thermal stresses, in particular in operation at high weaving speeds. The heat generated here by friction between the nut and the threaded spindle depends on the speed to around the third power.

The object underlying the present invention is to provide an apparatus of the type mentioned at the outset such that the heat stress in particular on the nut and threaded spindle is reduced.

This object is solved according to the features set forth in claim 1; further features of the invention are disclosed in the dependent claims.

The liquid lubricant supplied preferably under pressure flows off between the split nuts and the threaded spindle, since the annular chamber is largely sealed off to the outside. Since every split nut is adjusted almost play-free to one of the flanks of the thread profiles of the threaded spindle, whereas on the other flank a slight play is present, the supplied lubricant flows evenly along the flanks of the thread profiles. Thanks to the good and controlled lubrication thus achieved, the generation of heat is reduced, while the dissipation of generated heat is additionally assisted by the flowing off of the liquid lubricant thanks to the given flow conditions. A threaded spindle with multiple threads is advantageous for lubricant supply and heat dissipation.

Further details and advantages of the invention are shown in the following description of embodiments shown in the drawing and in the subclaims.
Fig. 1 shows a section through an apparatus in accordance with the invention,
Fig. 2 shows a perspective view of the apparatus in accordance with the invention,
Fig. 3 shows an exploded view of individual parts of the apparatus in accordance with the invention in a larger scale,
Fig. 4 shows an axial section along the line IV-IV of Fig. 5 through a nut comprising two split nuts of a apparatus in accordance with the invention,
Fig. 5 shows a view in the direction of the arrow V of Fig. 4,
Fig. 6 shows an axial section through a further embodiment of a nut formed by two split nuts along the line VI-VI of Fig. 7,
Fig. 7 shows a view of the nut in the direction of the arrow VII in Fig. 6,
Fig. 8 shows an axial section through a further embodiment of a nut of a apparatus in accordance with the invention along the line VIII-VIII of Fig. 9,
Fig. 9 shows a view in the direction of the arrow *IX of Fig. 8,
Fig. 10 shows a partial section through a further embodiment with an intermediate piece between the two split nuts and belonging to a holder, and
Fig. 11 shows a partial section through an embodiment with an intermediate ring between the two split nuts.

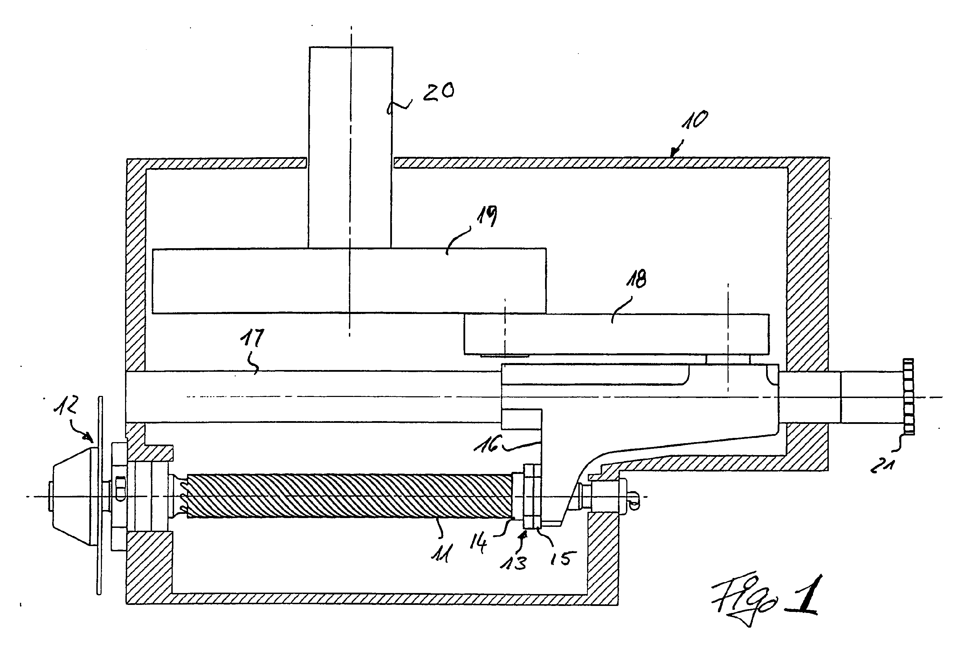

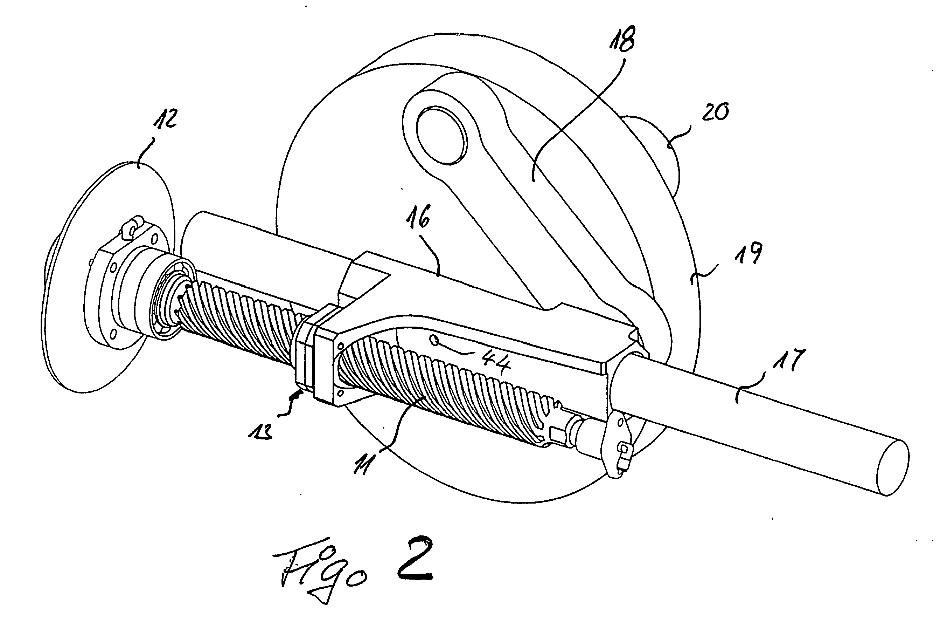

The apparatus shown in Figs. 1 and 2 is used to drive a gripper belt as known from said EP 0665908 B1 or US-A-4052906. In a housing 10, a threaded spindle 11 is rotatably mounted of which the end protruding out of the housing is provided with a mounting for a drive wheel 12, shown schematically, and designed for example as a gear wheel, in accordance with said US-A-4052906. The drive wheel 12 is used to drive flexible gripper belts or rigid gripper rods of a rapier loom. A nut 13 comprising two split nuts 14, 15 is arranged on the threaded spindle 11. The nut 13 is arranged inside a holder 16 movable back-and-forward on a rod 17 in a linear movement. A crank rod 18 is linked to the holder 16 and its other end is mounted in a crank disc 19. The crank disc 19 is arranged non-rotatably on a shaft 20 driven to rotate in a manner not shown in detail, for example by its own drive motor or by means of a drive connected to a main drive shaft of a loom. The rotating movement of the crank disc 19 is first translated into a linear back-and-forward movement of the holder 16. The nut 13 connected non-rotatably to the holder 16 converts the linear back-and-forward movement into a rotation movement of the threaded spindle 11, effecting a back-and-forward direction-changing rotation movement of the threaded spindle 11 matching the linear back-and-forward movement of the holder.

In the embodiment shown, the shaft 20 is aligned perpendicular to the longitudinal centre of the threaded spindle 11, resulting in a symmetrical movement. This movement can be varied by means of a different arrangement of the shaft 20 relative to the threaded spindle 11. In particular, it is possible by the arrangement of the shaft 20 relative to the threaded spindle 11 to affect the behaviour of the nut 13 - i.e. whether low or high accelerations take place - at the reversal points of its movement on the threaded spindle 11.

The rod 17 is provided outside the housing 10 with a drive wheel 12 by which it can be driven to perform rotations. Rotation of the rod 17 achieves a better distribution of the lubricant, in particular oil, supplied between the holder 16 and the rod 17, and hence a better lubrication and hydrodynamic mounting between rod 17 and holder 16.

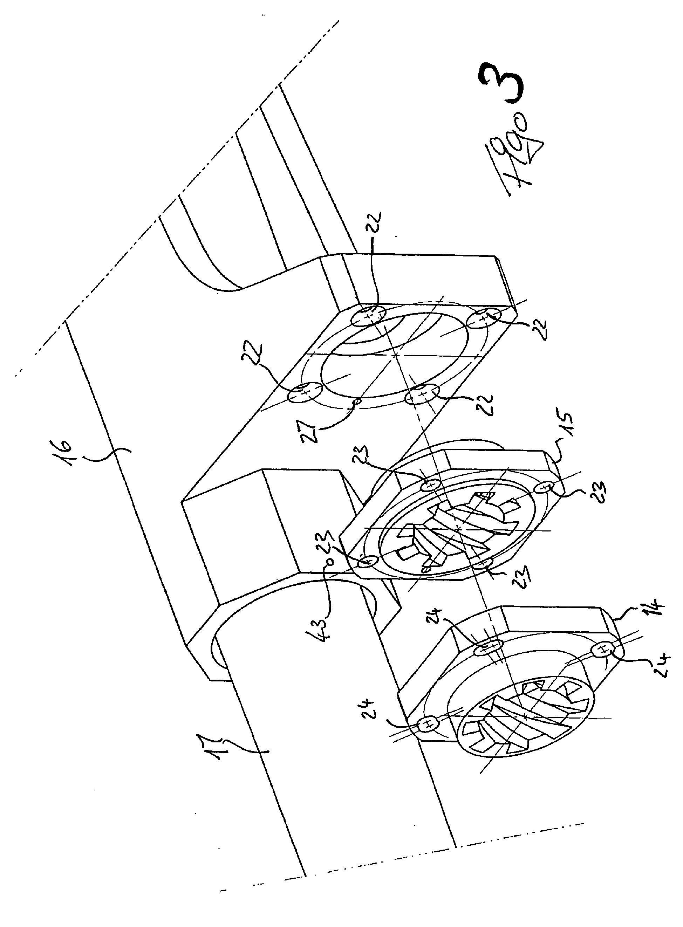

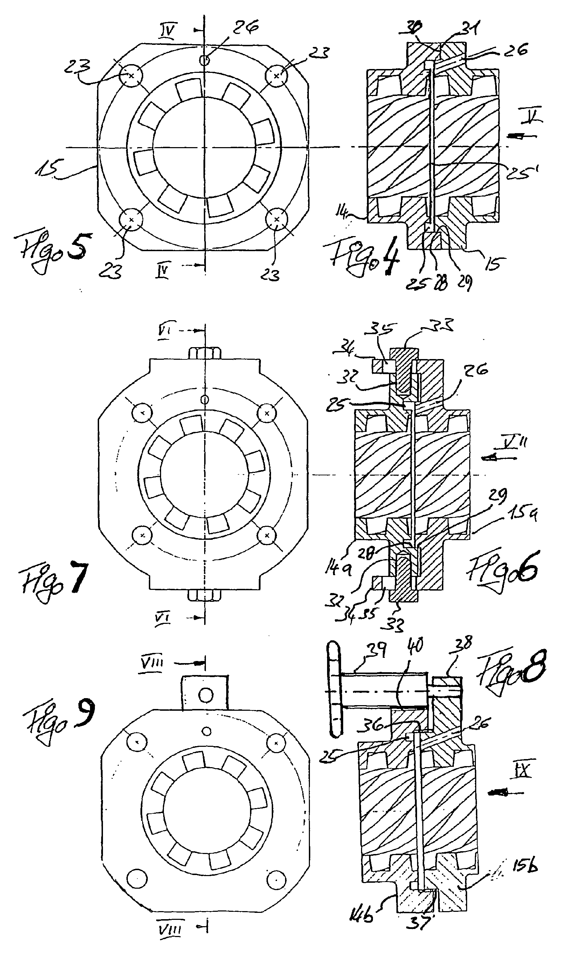

The nut 13 is attached non-rotatably to the holder 16. As shown in Fig. 3, the holder 16 is provided with tapped holes 22 into which screws, not shown, are screwed and pass through the split nuts 14, 15. The split nut 15 is provided with cylindrical holes 23 for the screws while the split nut 14 has openings 24 curved like slots for the screws. This allows the split nut 14 to be turned in the circumferential direction relative to the split nut 15 such that any play between the thread of the threaded spindle 11 and the split nuts 14, 15 is compensated. The flanks of the threads of the split nut 14 are in contact with a flank of the thread of the threaded spindle 11, whereas the flanks of the threads of the split nut 15 contact the opposite flanks of the thread of the threaded spindle 11. In the embodiment according to Fig. 3, the position set for compensation of the play is fixed using the screws by which the split nuts 14, 15 are attached to the holder 16. As shown in Figs. 6, 7 and 8, 9, the fixing of the position set for compensation of the play can also be achieved using means independent of the screws by which the split nuts 14, 15 are held. This fixing is described in more detail below.

To achieve a good lubrication between the split nuts 14, 15 and the threaded spindle 11, it is provided - as shown in Figs. 4 and 5 - that the split nuts 14, 15 together form an annular chamber 25 into which opens a lubricant feed connection 26. The lubricant feed connection 26 is assigned a lubricant channel 27 provided inside the holder 16 (Fig. 3) and connected in a manner not shown in detail to a unit for supplying a pressurised liquid lubricant. The lubricant can be supplied for example via the rod 17, so that no back-and-forward-moving flexible lines are required.

The annular chamber 25 is open towards the insides of the split nuts 14, 15, so that the liquid lubricant is supplied via a gap 25' to the threaded spindle 11. Since the threads in each of the split nuts 14, 15 contact on the one side with their flanks the flanks of the thread of the threaded spindle 11 or have only a very slight play, whereas they have on the other side a larger play relative to the flanks of the thread, a larger quantity of the liquid lubricant flows off in the areas of the greater play, along the threaded spindle out of the area of the annular chamber 25 via the gap 25'. This results on the one hand in uniform lubrication in the area in which the lubricant flows, while additionally achieving an improved heat dissipation. Part of the lubricant will also flow off on the side on which the threads of the split nut are moved by the flanks of the thread of the threaded spindle 11, i.e. on the side of the "active" flanks. Because of the tolerances, play will also be present in particular in the case of multiple threads on the side of the "active" flanks, via which play the liquid lubricant can flow off, leading on this side too to an improvement in the lubrication and cooling.

In the embodiment according to Figs. 3, 4 and 5, the split nuts 14, 15 with adjacent surfaces 28, 29 in the axial direction and with surfaces 30, 31 in the radial direction are in contact with one another, so that good sealing of the annular chamber 25 to the outside is possible. Since the split nuts 14, 15 are rotated against one another in the circumferential direction to compensate for the play, these surfaces remain adjacent to one another regardless of the relative position of the two split nuts 14, 15 to one another.

In the embodiment according to Figs. 6 and 7, split nuts 14a and 15a combined with one another are provided, and are moved relative to one another in their axial direction in order to compensate for any play to a threaded spindle 11. The split nut 14a is provided with tapped holes 32 arranged on radially opposite sides and into which screws 33 are screwed that pass through a projection 34 that extends over the outside of the split nut 14a in the area of the tapped holes 32. The projection 34 contains slots 35 extending in the axial direction. The two split nuts 14a, 15a are adjusted in the axial direction in order to compensate for the play to the threaded spindle 11. They are then fixed in the set position by means of the screws 33. The fixing of the two split nuts 14a, 15a against one another is hence separate from the function of attaching the split nuts 14a, 15a to the holder 16. To achieve precise positioning, spacers are preferably arranged between the split nuts 14a, 15a.

In the embodiment according to Figs. 6 and 7, the annular chamber 25 is sealed to the outside by means of adjacent surfaces 28, 29 of the split nuts 14a, 15a extending in the axial direction.

In the embodiment according to Figs. 8 and 9, the split nut 14b is provided with an inside thread 36 coaxial to its longitudinal axis and into which is screwed a threaded projection 37 of the split nut 15b. The screwed-together split nuts 14b, 15b can thus be adjusted relative to one another both in the circumferential direction and the axial direction by means of a screw movement in order to compensate for the play to the threaded spindle 11. To perform the adjustment, the split nut 15b is in the embodiment according to Figs. 8 and 9 provided with a projection 38 forming a receptacle for a tool 39 that engages with toothing in toothing 40 of the split nut 14b. In the embodiment according to Figs. 8 and 9, the annular chamber 25 is sealed to the outside by means of the thread 36, 37 of the split nuts 14b, 15b.

The sealing of the annular chamber 25 to the outside does not have to be absolute in the embodiments according to Figs. 4, 5, 6, 7 and 8, 9. It is sufficient if a seal is achieved that forms a flow resistance to the flowing off of the supplied liquid lubricant that is markedly higher than that prevailing between the threads of the split nuts 14, 14a, 14b and 15, 15a, 15b and the threaded spindle 11. In modified embodiments, elastic-rubber sealing rings are provided for sealing off the annular chambers 25. In another modified embodiment, spacer rings are arranged between the split nuts 14 and 15 and have for example radial openings for the lubricant to flow off.

The split nuts 14, 15, 14a, 15a, 14b, 15b in particular are made from a metal alloy having a relatively high thermal conductivity and at the same time good wear properties. Copper alloys (bronze) are useful here in particular.

The threaded spindle 11 and the split nuts 14, 15, 14a, 15a, 14b, 15b are provided with multiple threads in order to achieve the lowest possible surface pressure. In the embodiment, an eightfold thread is provided. The thread grooves and the thread profiles are made with a ratio of flank width to height of up to 1:2. In so doing, simple tools are preferably used that make parallel flanks both of the thread grooves and of the thread ridges. In the case of multiple-start threads, for example with eightfold threads, one or more per se "active" flanks of the thread will always have play relative to the threads on account of tolerances. This will lead to liquid lubricant getting into this area and improving the lubrication and cooling.

The threads of split nuts 14, 15, 14a, 15a, 14b, 15b have a pitch between around 35° and about 55°, preferably 45°.

The two split nuts 14, 15, 14a, 15a, 14b, 15b have in the embodiments in each case the same axial length. If however asymmetrical movements and in particular different accelerations are intended, it can be expedient to make one of the two split nuts with a greater axial length than the other.

If wear occurs after a certain period in use, the split nuts 14, 15, 14a, 15a, 14b, 15b can be readjusted relative to one another in order to compensate once again for play. If this readjustment is first done always in one direction, it is possible when a wear limit is reached to reverse the readjustment direction, thus providing overall a relatively long useful life for the split nuts. Replacement is not necessary until all flanks are worn.

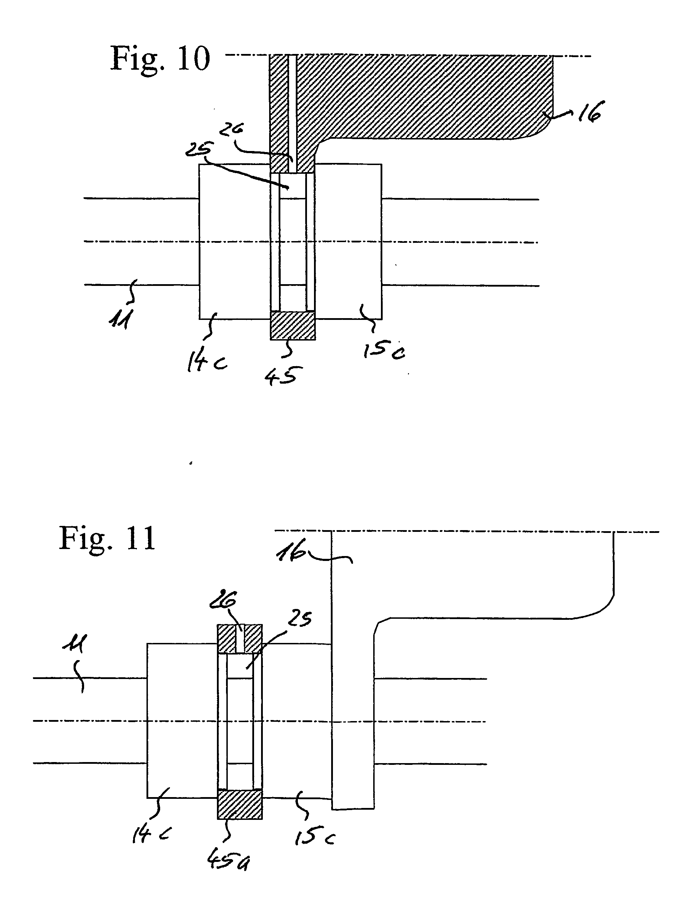

In the embodiment according to Fig. 10, an intermediate piece 45 is arranged between the split nuts 14c, 15c that creates an annular chamber 25 which is open to the threaded spindle 11. The split nuts 14c, 15c are attached to this intermediate piece such that at least one of the split nuts 14c, 15c is adjustable in the circumferential direction relative to the other in order to compensate for any play. The two split nuts 14c, 15c are in contact by sealing surfaces with the intermediate piece 45. Sealing rings can be provided, in a manner not shown in detail, between the split nuts 14c, 15c and the intermediate piece. The intermediate piece 45 in the embodiment is designed in one piece with the holder 16. The lubricant feed connection 26 opens into the annular chamber 25.

In the embodiment according to Fig. 11, it is provided that the intermediate piece 45a is a separate component and that the split nut 15c is attached to the holder 16. The lubricant feed connection 26 is provided in the intermediate piece 45a. In other respects, the embodiment according to Fig. 11 corresponds in its function to the embodiment according to Fig. 10. In a modified embodiment, the split nut 15 is in one piece with the holder 16.

In all embodiments, the split nuts 14, 15; 14a, 15a; 14b, 15b and 14c, 15c can be adjusted relative to one another such that in each case the "active" flanks of the threaded spindle 11 are assigned to the following split nut. The leading split nut then has a play relative to these flanks becoming "active" for the following split nut, via which the main quantity of the lubricant flows off. These flanks are therefore cooled and lubricated immediately before they become "active" flanks for the following split nut. When the movement direction is reversed, the conditions are reversed accordingly. Before the "driving" split nut reaches the "active" flanks, the latter are supplied with lubricant.

To obtain additional lubrication in the area of the reversing position, spray nozzles 43, 44 are provided in the holder 16, as shown in Figs. 2 and 3. These spray nozzles 43, 44 spray oil onto the threaded spindle in order to achieve an increased lubrication particularly in the area of the reversing points. In a modified embodiment, the threaded spindle 11 is submerged in an oil bath.

In all embodiments, closed rings are preferably used as split nuts 14, 15, 14a, 15a, 14b, 15b, 14c, 15c. These have the advantage, compared with nuts split in the axial direction, that due to the connection between the parts no forces are exerted on the threaded spindle in the radial direction.

In a modified embodiment, it is provided that a split nut, in particular the split nut 15, 15a, 15b, is made in one piece with the holder 16.

The invention opens up the possibility of precisely setting the play between the threaded spindle 11 and the split nuts 14, 15 (and for the other embodiments) and if necessary also readjusting it automatically using secondary means. To do so, the annular chamber 25 is briefly supplied with oil at a substantially higher pressure, which has the effect that the two split nuts 14, 15 (as in the other embodiments) are adjusted relative to one another in order to compensate for the play to the threaded spindle. It is possible here to briefly release the fixing means which fix the split nuts 14, 15 against one another, for example by using spring-loaded means. It is likewise possible to set the force with which the means achieve this fixing such that this force can be overcome by the force exerted by the compressed oil.

The drive of the holder 16 for the linear back-and-forward movement must of course not be derived from a crank disc. Other drives are possible, for example the drives set forth in the above-mentioned US-A-4052906.

## Claims

1. Apparatus for conversion of a rotation movement into back-and-forward rotation movements having a nut (13) drivable by means of a drive (18, 19, 20) for back-and-forward linear movement and arranged on a rotatably mounted threaded spindle (11) and made up of two split nuts (14, 15, 14a, 15a, 14b, 15b, 14c, 15c) adjustable to one another in their relative position, **characterized in that** an annular chamber (25) is provided between the two split nuts (14, 15, 14a, 15a, 14b, 15b) that is sealed to the outside and open inwards to the threaded spindle (11), and **in that** a lubricant feed (26) is connected to the annular chamber (25).

2. Apparatus according to Claim 1, **characterized in that** the split nuts (14, 15) which are preferably in contact with one another by circumferential radial surfaces (30, 31) are rotatable relative to one another and fixable in the rotated position.

3. Apparatus according to Claim 1, **characterized in that** the split nuts (14a, 15a) which are preferably in contact with one another by circumferential surfaces (28, 29) extending in the axial direction are adjustable relative to one another in the axial direction and fixable in the set position.

4. Apparatus according to Claim 1, **characterized in that** one of the split nuts (15b) is screwed with a threaded projection (37) into an inside thread (36) of the other split nut (14b).

5. Apparatus according to Claim 1, **characterized in that** an intermediate piece (45) is arranged between the split nuts (14c, 15c) and is provided with the lubricant feed connection (26).

6. Apparatus according to one of Claims 1 to 5, **characterized in that** the nut (13) is attached to a holder (16) arranged slidably on a rod (17) and moving linearly back and forward, on which holder a split nut (15, 15a, 15b) is preferably stationarily attached and relative to which the other split nut (14, 14a, 14b) is adjustable.

7. Apparatus according to Claim 6, **characterized in that** the stationarily attached split nut (15, 15a, 15b) is provided with the lubricant feed connection (26) to which a lubricant feed connection (27) of the holder (16) is led.

8. Apparatus according to one of Claims 5 to 7, **characterized in that** one split nut (15, 15a, 15b, 15c) is made in one piece with the holder (16).

9. Apparatus according to Claim 5 or 6, **characterized in that** the intermediate piece (45) connects the split nuts (14c, 15c) to the holder (16).

10. Apparatus according to Claim 9, **characterized in that** the holder (16) is in one piece with the intermediate piece (45).

11. Apparatus according to one of Claims 1 to 10, **characterized in that** the nut (13) and the threaded spindle (11) have a multiple thread.

12. Apparatus according to one of Claims 1 to 11, **characterized in that** the thread of the nut (13) and the threaded spindle (11) have a pitch between around 35° and about 55°, preferably 45°.

13. Apparatus according to one of Claims 1 to 12, **characterized in that** the rod (17) on which the holder (16) is arranged is rotatably mounted and driven to rotating movements.

## Patentansprüche

1. Vorrichtung zum Umformen einer Rotationsbewegung in hin- und hergehende Rotationsbewegungen, mit einer mittels eines Antriebs (18, 19, 20) zu hin- und hergehender linearer Bewegung antreibbaren Mutter (13), die auf einer drehbar gelagerten Gewindespindel (11) angeordnet ist und die aus zwei in ihrer Relativposition zueinander einstellbaren Teilmuttern (14, 15, 14a, 15a, 14b, 15b, 14c, 15c) zusammengefügt ist, **dadurch gekennzeichnet, dass** zwischen den beiden Teilmuttern (14, 15, 14a, 15a, 14b, 15b) eine Ringkammer (25) vorgesehen ist, die nach aussen abgedichtet und nach innen zu der Gewindespindel (11) hin offen ist, und dass einen Schmiermittelzulauf (26) verbunden ist mit der Ringkammer (25).

2. Vorrichtung nach Anspruch 1, **dadurch gekennzeichnet, dass** die Teilmuttern (14, 15), die vorzugsweise mit umlaufenden, radialen Flächen (30, 31) aneinander liegen, gegeneinander verdrehbar und in der gedrehten Stellung fixierbar sind.

3. Vorrichtung nach Anspruch 1, **dadurch gekennzeichnet, dass** die Teilmuttern (14a, 15a), die vorzugsweise mit sich in axialer Richtung erstreckenden, umlaufenden Flächen (28, 29) aneinander liegen, in axialer Richtung relativ zueinander verstellbar und in der eingestellten Stellung fixierbar sind.

4. Vorrichtung nach Anspruch 1, **dadurch gekennzeichnet, dass** eine der beiden Teilmuttern (15b) mit einem Gewindeansatz (37) in ein Innengewinde (36) der anderen Teilmutter (14b) eingeschraubt ist.

5. Vorrichtung nach Anspruch 1, **dadurch gekennzeichnet, dass** zwischen den Teilmuttern (14c, 15c) ein Zwischenstück (45) angeordnet ist, das mit dem Schmiermittelzulauf (26) versehen ist.

6. Vorrichtung nach einem der Ansprüche 1 bis 5, **dadurch gekennzeichnet, dass** die Mutter (13) an einem auf einer Stange (17) gleitend angeordneten, linear hin- und herbeweglichen Halter (16) angebracht ist, an welchem Halter vorzugsweise eine Teilmutter (15, 15a, 15b) stationär angebracht ist, gegenüber welcher die andere Teilmutter (14, 14a, 14b) verstellbar ist.

7. Vorrichtung nach Anspruch 6, **dadurch gekennzeichnet, dass** die stationär angebrachte Teilmutter (15, 15a, 15b) mit dem Schmiermittelzulauf (26) versehen ist, zu dem ein Schmiermittelzufuhranschluss (27) des Halters (16) geführt ist.

8. Vorrichtung nach einem der Ansprüche 5 bis 7, **dadurch gekennzeichnet, dass** eine Teilmutter (15, 15a, 15b, 15c) einteilig mit dem Halter (16) hergestellt ist.

9. Vorrichtung nach Anspruch 5 oder 6, **dadurch gekennzeichnet, dass** das Zwischenstück (45) die Teilmuttern (14c, 15c) mit dem Halter (16) verbindet.

10. Vorrichtung nach Anspruch 9, **dadurch gekennzeichnet, dass** der Halter (16) einteilig mit dem Zwischenstück (45) ist.

11. Vorrichtung nach einem der Ansprüche 1 bis 10, **dadurch gekennzeichnet, dass** die Mutter (13) und die Gewindespindel (11) ein mehrgängiges Gewinde aufweisen.

12. Vorrichtung nach einem der Ansprüche 1 bis 11, **dadurch gekennzeichnet, dass** das Gewinde der Mutter (13) und die Gewindespindel (11) eine Steigung zwischen etwa 35° und etwa 55° besitzen, vorzugsweise von 45°.

13. Vorrichtung nach einem der Ansprüche 1 bis 12, **dadurch gekennzeichnet, dass** die Stange (17) auf der der Halter (16) angeordnet ist, drehbar gelagert und zu Drehbewegungen angetrieben ist.

## Revendications

1. Appareil pour la conversion d'un mouvement de rotation dans un mouvement de rotation en arrière et en avant ayant un écrou (13) entraînable au moyen d'une commande (18, 19, 20) pour mouvement linéaire en arrière et en avant et disposé sur une broche filetée (11) montée rotativement et composée de deux écrous fendus (14, 15, 14a, 15a, 14b, 15b, 14c, 15c) réglables l'une à l'autre dans leur position relative, **caractérisé en ce qu'**une chambre annulaire (25) est pourvue entre les deux écrous fendus (14, 15, 14a, 15a, 14b, 15b) qui est étanchée à l'extérieur et ouvert vers l'intérieur à la broche filetée (11), et **en ce qu'**une alimentation de lubrifiant (26) est reliée à la chambre annulaire (25).

2. Appareil selon la revendication 1, **caractérisé en ce que** les écrous fendus (14, 15) qui sont préférentiellement en contact l'une à l'autre par les surfaces radiales circonférentielles (30, 31) sont rotatif relativement l'une à l'autre et fixable en position tournée.

3. Appareil selon la revendication 1, **caractérisé en ce que** les écrous fendus (14a, 15a) qui sont préférentiellement en contact l'une à l'autre par les surfaces circonférentielles (28, 29) s'étendant dans la direction axiale sont réglables relativement l'une à l'autre dans la direction axiale et fixable en position définie.

4. Appareil selon la revendication 1, **caractérisé en ce qu'**une des écrous fendus (15b) est vissé avec une projection filetée (37) dans un fil intérieur (36) de l'autre écrou fendu (14b).

5. Appareil selon la revendication 1, **caractérisé en ce qu'**une pièce intermédiaire (45) est disposée entre les écrous fendus (14c, 15c) et est pourvu avec le raccordement d'alimentation de lubrifiant (26).

6. Appareil selon une des revendications 1 à 5, **caractérisé en ce que** l'écrou (13) est fixé à un support (16) disposé de façon coulissante sur une tige (17) et se déplace linéairement en arrière et en avant, sur lequel support un écrou fendu (15, 15a, 15b) est fixé préférentiellement stationnaire et relativement auquel l'autre écrou fendu (14, 14a, 14b) est réglable.

7. Appareil selon la revendication 6, **caractérisé en ce que** l'écrou fendu fixé stationnaire (15, 15a, 15b) est pourvu du raccordement d'alimentation de lubrifiant (26) auxquels un raccordement d'alimentation de lubrifiant (27) du support (16) est guidé.

8. Appareil selon une des revendications 5 à 7, **caractérisé en ce qu'**un écrou fendu (15, 15a, 15b, 15c) est fabriqué dans une seule pièce avec le support (16).

9. Appareil selon la revendication 5 ou 6, **caractérisé en ce que** la pièce intermédiaire (45) relie les écrous fendus (14c, 15c) au support (16).

10. Appareil selon la revendication 9, **caractérisé en ce que** le support (16) est en une pièce avec la pièce intermédiaire (45).

11. Appareil selon une des revendications 1 à 10, **caractérisé en ce que** l'écrou (13) et la broche filetée (11) ont un fil multiple.

12. Appareil selon une des revendications 1 à 11, **caractérisé en ce que** le fil de l'écrou (13) et la broche filetée (11) ont un pas entre environ 35° et environ 55°, préférentiellement 45°.

13. Appareil selon une des revendications 1 à 12, **caractérisé en ce que** la tige (17), sur lequel le support (16) est disposé, est montée rotativement et commandée aux mouvements rotatifs.
